# EUROPÄISCHE PATENTSCHRIFT

(11) **EP 1 568 824 B1**
(45) Veröffentlichungstag und Bekanntmachung des Hinweises auf die Patenterteilung: **11.12.2013**
(21) Anmeldenummer: 05000524.8
(22) Anmeldetag: 12.01.2005
(51) Int. Cl.: E03F 3/04

(54) **Regenwasserbehandlungsanlage**
Plant for treating rainwater
Installation pour le traitement d'eau pluviale

(30) Priorität: 24.02.2004 DE 102004008960
(43) Veröffentlichungstag der Anmeldung: 31.08.2005
(73) Patentinhaber: FRÄNKISCHE ROHRWERKE Gebr. Kirchner GmbH & Co. KG, 97486 Königsberg (DE)
(72) Erfinder: Adams, Dietmar, 01328 Dresden (DE); Haase, Reinhard, 32689 Kalletal-Hohenhausen (DE); Kriese, Jens, 14621 Schönwalde (DE); Wilhelm, Jörg, 72070 Tübingen (DE)
(74) Vertreter: Herzog, Markus

(56) Entgegenhaltungen:
- DE-A1- 19 916 964
- DE-U- 1 727 595

## Beschreibung

Die Erfindung betrifft ein Sedimentationsrohr zum zumindest teilweisen Entfernen von Schmutzfrachten aus Abwasser, welches wenigstens einen Strömungsraum mit wenigstens einer Einlassöffnung und wenigstens einer Auslassöffnung aufweist, wobei das Abwasser durch die wenigstens eine Einlassöffnung in den Strömungsraum eintritt und nach Durchströmen des wenigstens einen Strömungsraums durch die wenigstens eine Auslassöffnung wieder aus dem wenigstens einen Strömungsraum austritt, und wobei zumindest ein Teil der Schmutzfracht während des Durchströmens des wenigstens einen Strömungsraums schwerkraftbedingt zu Boden sinkt.

Der Einsatz derartiger Sedimentationsrohre ist im Stand der Technik zwar noch nicht bekannt. Es kommt jedoch auch in herkömmlichen rohrförmigen Abwasserrohren beispielsweise kreisförmigen Querschnitts dann, wenn das Abwasser Schmutzfrachten mit sich führt, zur Sedimentation zumindest eines Teils dieser Schmutzfrachten am Boden bzw. der Sohle dieser Abwasserleitung. Diese Sedimentation ist jedoch unerwünscht, da sie den Querschnitt des Abwasserrohrs einengt und somit dessen Wasserleitungskapazität vermindert. Daher müssen diese Abwasserrohre in regelmäßigen Abständen beispielsweise mittels Hochdruckreinigungsgeräten gereinigt werden.

Im Unterschied hierzu soll bei den erfindungsgemäßen Sedimentationsrohren die Sedimentation sogar gezielt gefördert werden, um das Abwasser zumindest teilweise zu reinigen.

Insbesondere die Bewirtschaftung von Regenwasser umfasst im Wesentlichen die Nutzung, Rückhaltung, Behandlung und Versickerung von Wasser, das in Form von Regen auf befestigten Flächen niedergeht. Durch diese Regenwasserbewirtschaftung soll, soweit möglich, die direkte Einleitung des Regenwassers in das Kanalnetz vermieden werden. Dabei gewinnt die Vorbehandlung des anfallenden Regenwassers zunehmend an Bedeutung. Beispielsweise werden bei der Regenwasserversickerung zunehmend höhere Anforderungen an die Wasserqualität bzw. die Freiheit der zu beseitigenden Wässer von Schadstoffen gestellt. So enthält beispielsweise Regenwasser von Verkehrs-, Parkplatz- oder Hofflächen höhere Schadstoffanteile, insbesondere Schwermetalle, PAK, KW. Daher muss das auf diesen Flächen anfallende Regenwasser über eine belebte Bodenzone oberirdisch versickert werden. Da hierfür teure Grundstücksflächen zur Verfügung gestellt werden müssen, besteht daher Bedarf an einer unterirdischen Vorreinigung mit einer äquivalenten Reinigungsleistung.

Es existieren bereits einige Methoden und Anlagen, die eine mehr oder weniger effiziente Vorreinigung der vorstehend aufgeführten Schadstoffe bewirken. So können die Schadstoffe beispielsweise mittels Filtrationsvorrichtungen, wie Sieben, Substraten und dergleichen, aus dem Abwasser entfernt werden. Diese Filtrationsvorrichtungen benötigen jedoch eine möglichst wirkungsvolle, vorgeschaltete Abtrennung von Feststoffen, damit die Standzeit erhöht und eine Kolmation des Filters vermieden werden kann. Die hierfür bislang eingesetzten Sedimentationsanlagen benötigen jedoch ein bestimmtes Mindestvolumen, damit die Absetzprozesse wirkungsvoll ablaufen können. Auch sie benötigen daher, wenn auch unterirdisch, sehr viel Bauraum.

Demgegenüber ist es Aufgabe der Erfindung, eine effektiv arbeitende Sedimentationsvorrichtung bereitzustellen, die vollständig unterirdisch und zudem raumsparend angeordnet werden kann und die Funktionsfähigkeit der Sedimentationsvorrichtung über lange Zeit aufrecht erhalten zu können. Diese Aufgabe wird durch ein Sedimentationsrohr gemäß den des Anspruchs 1 Gegenstand gelöst,

Von den vorstehend beschriebenen herkömmlichen Abwasserrohren unterscheidet sich das erfindungsgemäße Sedimentationsrohr dadurch, dass die Sedimentation von Feststoffanteilen bzw. Schmutzfrachtanteilen aus dem das Rohr durchströmenden Abwasser nicht ein unerwünschter, sondern gerade ein erwünschter Effekt ist. Um die unerwünschte Reduzierung des Querschnitts des Abwasserrohrs verhindern zu können, verfügt das erfindungsgemäße Sedimentationsrohr zum einen über einen Strömungsraum, der die Funktion des Abwasserrohrs übernimmt, und zusätzlich über einen Sedimentationsraum, der mit dem Strömungsraum über wenigstens eine Durchtrittsöffnung verbunden ist. Durch diese Durchtrittsöffnung können die zu Boden sinkenden Schmutzfrachten bzw. Feststoffe in den Sedimentationsraum gelangen und sich dort absetzen. Dabei ist es erfindungsgemäß von großer Bedeutung, dass dieser Sedimentationsraum im Sedimentationsbetrieb des Sedimentationsrohrs nicht von Abwasser durchströmt ist, sondern dass er bezüglich der Strömung des Abwassers einen Totraum bildet.

Um die Besonderheiten in Anordnung und Funktion des erfindungsgemäßen Sedimentationsrohrs, und insbesondere dessen Sedimentationsraums, im Vergleich mit dem Stand der Technik noch deutlicher hervorzuheben, sei auf die DE 101 04 065 A1, die EP 0 964 965 A1 und die DE-OS-1727595 verwiesen. Betrachtet man lediglich den Querschnitt des erfindungsgemäßen Sedimentationsrohrs mit dem Strömungsraum und dem darunter angeordneten Sedimentationsraum und vergleicht diesen mit dem Querschnitt der aus den genannten Druckschriften bekannten Rohre, so stellt man fest, dass beide Rohrtypen zwei parallel verlaufende Räume aufweisen.

Bei den Rohren des Standes der Technik handelt es sich jedoch bei beiden Räumen um Strömungsräume, nämlich einen ersten Strömungsraum kleineren Querschnitts, durch den das Abwasser bei einer geringen anfallenden Wassermenge geleitet wird, und einen zweiten Strömungsraum größeren Querschnitts, der dann hinzutritt, wenn größere Wassermengen anfallen. Als Grund für diese Ausbildung wird in sämtlichen genannten Druckschriften angeführt, dass durch die Beschränkung des Abwassers bei geringer anfallender Wassermenge auf den Strömungsraum kleinen Querschnitts so hohe Strömungsgeschwindigkeit in dem Abwasserrohr erzielt werden soll, dass Sedimentation zuverlässig vermieden werden kann.

Im Unterschied hierzu wird bei dem erfindungsgemäßen Sedimentationsrohr der Sedimentationsraum im normalen Betrieb des Sedimentationsrohrs nicht von Wasser durchströmt, sondern bildet einen Totraum, in dem das Wasser im Idealzustand steht.

Um die Sedimentation von Schmutzfrachtanteilen aus dem den Strömungsraum durchströmenden Abwasser begünstigen zu können, kann der Querschnitt des Strömungsraums derart, insbesondere so groß, gewählt sein, dass auch bei großen Mengen anfallenden Abwassers sich im Strömungsraum eine die Sedimentation begünstigende Strömungsgeschwindigkeit des Abwassers einstellt.

Grundsätzlich ist es möglich, dass wenigstens ein Strömungsraum und wenigstens ein Sedimentationsraum durch eine einzige in Strömungsrichtung durchgehend ausgebildete Durchtrittsöffnung miteinander verbunden sind. Alternativ kann jedoch auch wenigstens ein Strömungsraum und wenigstens ein Sedimentationsraum durch eine Mehrzahl von Durchtrittsöffnungen miteinander verbunden sein, welche beispielsweise in Strömungsrichtung aufeinanderfolgend angeordnet und vorzugsweise länglich ausgebildet sein können. Es ist aber auch eine Gitterstruktur-Anordnung der Durchtrittsöffnungen denkbar, beispielsweise in Form eines Wabengitters. Für den Fall des Vorhandenseins mehrerer Durchtrittsöffnungen wird ferner vorgeschlagen, dass der Boden wenigstens eines Strömungsraums im Bereich der Durchtrittsöffnungen mit Lamellen versehen ist, welche bezüglich der Strömungsrichtung beispielsweise im Wesentlichen orthogonal oder schräg angeordnet sind. Derartige Lamellen können die Sedimentation der Feststoffe bzw. Schmutzfrachten ebenfalls begünstigen.

Als weitere Maßnahme zur Begünstigung der Sedimentation kann wenigstens ein Strömungsraum bezogen auf die Strömungsrichtung des Abwassers mit Gegengefälle angeordnet sein. Grundsätzlich ist es jedoch auch möglich, das Sedimentationsrohr ohne Gegengefälle oder sogar mit Gefälle in Strömungsrichtung anzuordnen.

Um das sich ansammelnde Sediment von Zeit zu Zeit aus dem wenigstens einen Sedimentationsraum austragen und so die Funktionsfähigkeit des erfindungsgemäßen Sedimentationsrohrs über lange Zeit aufrecht erhalten zu können, wird vorgeschlagen, dass wenigstens ein Sedimentationsraum wenigstens eine Wartungsöffnung aufweist, welche im Sedimentationsbetrieb verschlossen ist, zu Reinigungszwecken jedoch bedarfsweise öffenbar ist. Beispielsweise kann die wenigstens eine Wartungsöffnung mittels einer Rückschlagklappe verschlossen sein. Eine derartige Reinigung kann femer durch das vorstehend angesprochene Vorsehen eines Gegengefälles erleichtert werden.

Zur Erleichterung dieser Wartung kann wenigstens ein Ende wenigstens eines Strömungsraums und gegebenenfalls auch wenigstens eines Sedimentationsraums in einem im Wesentlichen vertikal verlaufenden Schacht enden. So kann beispielsweise eines der Enden wenigstens eines Sedimentationsraums, vorzugsweise dessen höher gelegenes Ende, mit einem Anschlusskanal zum Einführen eines Reinigungsgeräts verbunden sein. Femer kann eines der Enden wenigstens eines Sedimentationsraums, vorzugsweise dessen tiefer gelegenes Ende, mit einem Schmutzfracht-Auffangbehälter verbunden sein. Mittels des Reinigungsgeräts, beispielsweise einer Hochdruck-Reinigungslanze, kann das Sediment aus dem Sedimentationsraum ausgetragen und in einem Schmutzfracht-Auffangbehälter, der beispielsweise in einem vertikal verlaufenden Wartungsschacht angeordnet ist, aufgefangen werden. Aus diesem Auffangbehälter kann das Sediment dann in an sich bekannter Weise abgepumpt werden. Ist das Sedimentationsrohr im Gegengefälle angeordnet, so kann hierdurch die Gefahr einer unbeabsichtigten Verunreinigung weiter stromabwärts gelegener Anlagenteile, beispielsweise einer Rigolenanordnung, zumindest vermindert werden.

In Weiterbildung der Erfindung wird vorgeschlagen, dass wenigstens ein Strömungsraum und wenigstens ein Sedimentationsraum einstückig ausgebildet sind. Femer kann wenigstens ein Strömungsraum oder/und wenigstens ein Sedimentationsraum aus Kunststoff gefertigt sein. Als Fertigungsverfahren kommt beispielsweise Extrusion in Frage.

Die Erfindung wird im Folgenden an Ausführungsbeispielen anhand der beigefügten Zeichnungen näher erläutert werden. Es stellt dar:
- Fig. 1: eine schematische, geschnittene Seitenansicht eines erfindungsgemäßen Sedimentationsrohrs als Teil einer Sedimentationsanlage;
- Fig. 2a: einen Querschnitt einer ersten Ausführungsform des erfindungsgemäßen Sedimentationsrohrs;
- Fig. 2b: eine geschnittene Seitenansicht des Sedimentationsrohrs gemäß Fig. 2a, und
- Fig. 3 und 4: Ansichten ähnlich Fig. 2a weiterer Ausführungsbeispiele erfindungsgemäßer Sedimentationsrohre.

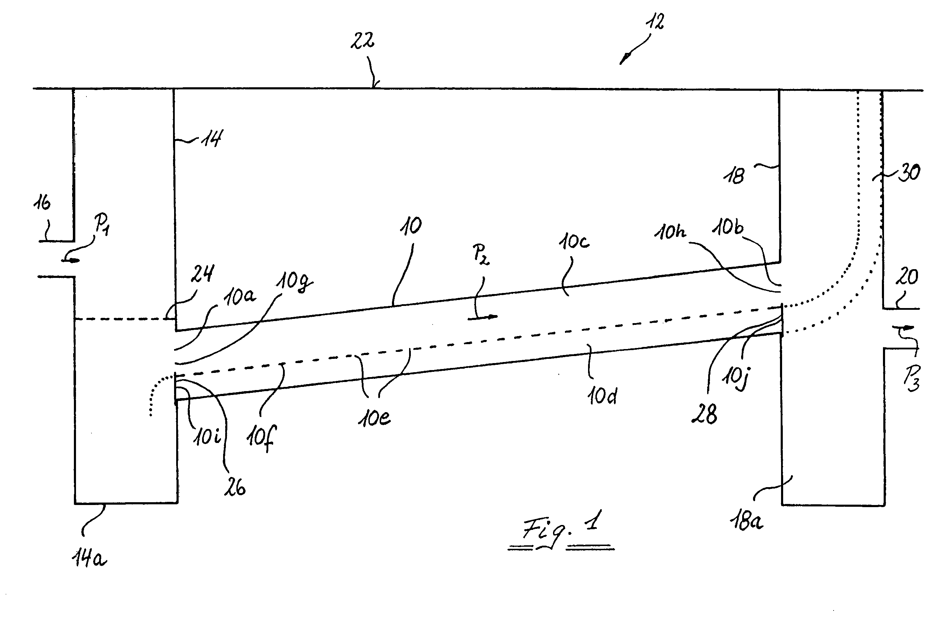

In Fig. 1 ist ein erfindungsgemäßes Sedimentationsrohr ganz allgemein mit 10 bezeichnet. Es ist Teil einer Regenwasser-Bewirtschaftungsanlage 12, welche femer einen ersten Wartungsschacht 14 mit einem Zulauf 16 und einen zweiten Wartungsschacht 18 mit einem Ablauf 20 umfasst.

Durch den Zulauf 16 wird Regenwasser, das auf einer versiegelten Oberfläche 22, beispielsweise einer Straße, einem Parkplatz oder dergleichen, niedergegangen ist, in den im Wesentlichen vertikal verlaufenden Wartungsschacht 14 eingeleitet (Pfeil P₁). Vor der Einleitung in den Schacht 14 kann das Wasser bereits einen (nicht dargestellten) Siebeimer oder eine ähnliche Filtrationsvorrichtung durchströmt haben, in welcher grobe Schmutzfrachtanteile, beispielsweise Blätter, aus dem Abwasser entfernt worden sind.

In dem Schacht 14 ist femer eine Prallplatte 24 vorgesehen, mittels derer die Strömung des Abwassers vergleichmäßigt werden kann, so dass das Wasser im Sedimentationsrohr 10 im Wesentlichen turbulenzfrei und mehr oder weniger laminar strömt.

Wie in Fig. 1 dargestellt ist, ist das Sedimentationsrohr 10 von seinem in Fig. 1 linken, mit dem Schacht 14 in Verbindung stehenden Ende 10a zu seinem in Fig. 1 rechten, mit dem Schacht 18 in Verbindung stehenden Ende 10b hin ansteigend, d.h. in Strömungsrichtung P₂ des Abwassers mit Gegengefälle, angeordnet. Dieses Gegengefälle unterstützt in Verbindung mit der vorstehend angesprochenen turbulenzarmen Strömung die Sedimentation von in dem Abwasser mitgeführten Schmutzfrachten, insbesondere Feststoffen.

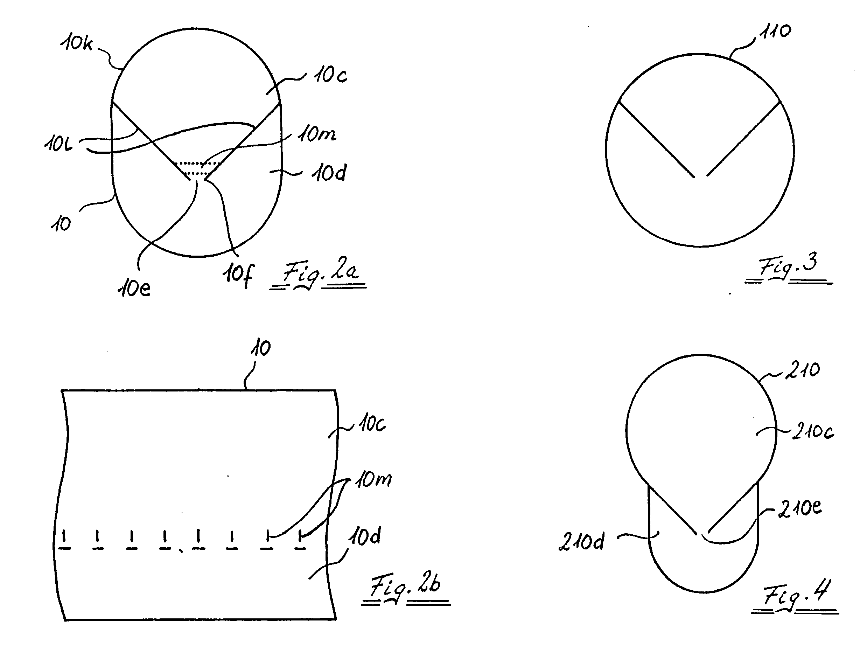

Damit die sich ablagernden Schmutzfrachten nicht zu einer Einengung seines strömungsaktiven Querschnitts führen, ist das erfindungsgemäße Sedimentationsrohr 10 in zwei Räume unterteilt, nämlich einen Strömungsraum 10c und einen Sedimentationsraum 10d, die über eine Mehrzahl von Verbindungsschlitzen 10e miteinander in Verbindung stehen. Die Verbindungsschlitze 10e sind dabei im Bereich der Sohle bzw. des Bodens 10f des Strömungsraums 10c angeordnet. Ergänzend sei auf die Darstellungen gemäß Fig. 2a und 2b verwiesen.

Im Unterschied zum Strömungsraum 10c, der im Bereich der beiden Längsenden 10a und 10b des Sedimentationsrohrs 10 über Durchtrittsöffnungen 10g und 10h mit den Schächten 14 und 18 verbunden ist, sind die entsprechenden Übertrittsöffnungen 10i und 10j des Sedimentationsraums 10d im normalen Reinigungs- bzw. Sedimentationsbetrieb mittels Klappen 26 und 28 verschlossen. In Folge dessen wird der Sedimentationsraum 10d im normalen Betrieb des Sedimentationsrohrs 10 nicht von Abwasser durchströmt, so dass die sich in ihm absetzenden Schmutzfrachten nicht wieder aufgewirbelt und von dem den Strömungsraum 10c durchströmenden Abwasser mitgerissen werden können.

Andererseits können die beiden Klappen 26 und 28 zur Wartung bzw. Reinigung geöffnet werden, so dass das Sediment mittels eines üblichen Reinigungsgeräts, beispielsweise einer Hochdruck-Reinigungslanze, aus dem Sedimentationsraum 10d herausgespült werden kann. Das Reinigungsgerät kann dabei von der Oberfläche 22 her über den Schacht 18 in den Sedimentationsraum 10d eingeführt werden. Wie in Fig. 1 punktiert angedeutet ist, kann dies dadurch erleichtert werden, dass das Ende 10j des Sedimentationsraums 10d über einen Zusatzkanal 30 bis zur Oberfläche 22 verlängert ist.

Das aus dem Sedimentationsraum 10d herausgespülte Sediment kann aufgrund des Gegengefälles zum Schacht 14 hin abfließen und sich an dessen Boden 14a sammeln, der in diesem Fall als Sediment-Auffangbehälter dient. Aus diesem Sediment-Auffangbehälter 14a kann das Sediment dann in herkömmlicher Weise abgepumpt werden.

Nach erneutem Verschließen der Klappen 26 und 28 ist der Sedimentationsraum 10d für einen weiteren Betriebszyklus vorbereitet.

Das auf diese Art und Weise gereinigte Abwasser kann vom Schacht 18 über dessen Auslass 20 beispielsweise einer Rigolenanordnung zugeführt werden (Pfeil P₃), welche der Versickerung des Abwassers im Erdreich dient. Dabei ist es möglich, dass in dem Bodenteil 18a des Schachts 18 weitere Reinigungsvorrichtungen, beispielsweise Filtrationsstufen oder dergleichen, vorgesehen sind.

Wie in Fig. 2a dargestellt ist, kann das Sedimentationsrohr 10 beispielsweise eine äußere Umhüllung 10k umfassen, welche einen Innenraum definiert, der durch zwei V-förmig angeordnete Trennwände 101 in einen Strömungsraum 10c und einen Sedimentationsraum 10d unterteilt ist. Im Bereich des Bodens 10f des Strömungsraums 10c können darüber hinaus lamellenartige Querstege 10m angeordnet sein, welche die Sedimentation von Schmutzfrachtanteilen aus dem im Strömungsraum 10d strömenden Abwasser erleichtern (siehe auf Fig. 2b).

Wie die Figuren 3 und 4 belegen, ist die Querschnittsform des Sedimentationsrohrs 10 aber nicht auf die in Fig. 2a dargestellte Querschnittsform beschränkt. Vielmehr können auch Sedimentationsrohre 110 zum Einsatz kommen, die von anderen, herkömmlichen Rohrquerschnittsformen abgeleitet sind, beispielsweise dem in Fig. 3 dargestellten kreisförmigen Rohrquerschnitt.

Es sind jedoch auch andersartig gestaltete Rohrquerschnitte denkbar, beispielsweise der in Fig. 4 dargestellte Querschnitt eines Sedimentationsrohrs 210, so lange diese Querschnitte nur wenigstens einen Strömungsraum 210c umfassen, der über wenigstens eine Öffnung 210e mit einem darunter angeordneten Sedimentationsraum 210d verbunden ist, wie dies bei allen erfindungsgemäßen Ausführungsformen der Fall ist.

## Patentansprüche

1. Sedimentationsrohr (10) zum zumindest teilweisen Entfernen von Schmutzfrachten aus Abwasser, welches wenigstens einen Strömungsraum (10c) mit wenigstens einer Einlassöffnung (10g) und wenigstens einer Auslassöffnung (10h) aufweist,
wobei das Abwasser durch die wenigstens eine Einlassöffnung (10g) in den Strömungsraum (10c) eintritt und nach Durchströmen des wenigstens einen Strömungsraums (10c) durch die wenigstens eine Auslassöffnung (10h) wieder aus dem wenigstens einen Strömungsraum (10c) austritt,
wobei zumindest ein Teil der Schmutzfracht während des Durchströmens des wenigstens einen Strömungsraums (10c) schwerkraftbedingt zu Boden sinkt,
wobei der wenigstens eine Strömungsraum (10c) über wenigstens eine an seinem Boden (10f) vorgesehene Durchtrittsöffnung (10e) mit wenigstens einem Sedimentationsraum (10d) verbunden ist, in welchem sich in dem wenigstens einen Strömungsraum (10c) zu Boden sinkende und durch die wenigstens eine Durchtrittsöffnung (10e) hindurchtretende Schmutzfrachten absetzen, und wobei wenigstens ein Sedimentationsraum (10d) wenigstens eine Wartungsöffnung (10i, 10j) aufweist, welche im Sedimentationsbetrieb verschlossen ist, zu Reinigungszwecken jedoch bedarfsweise öffenbar ist.

2. Sedimentationsrohr nach Anspruch 1,
**dadurch gekennzeichnet, dass** wenigstens ein Strömungsraum (10c) und wenigstens ein Sedimentationsraum (10d) durch eine einzige in Strömungsrichtung (P₂) durchgehend ausgebildete Durchtrittsöffnung (10e) miteinander verbunden sind.

3. Sedimentationsrohr nach Anspruch 1,
**dadurch gekennzeichnet, dass** wenigstens ein Strömungsraum (10c) und wenigstens ein Sedimentationsraum (10d) durch eine Mehrzahl von, vorzugsweise in Strömungsrichtung (P₂) aufeinander folgend angeordneter oder/und länglich ausgebildeter, Durchtrittsöffnungen (10e) miteinander verbunden sind.

4. Sedimentationsrohr nach Anspruch 3,
**dadurch gekennzeichnet, dass** der Boden (10e) wenigstens eines Strömungsraums (10c) den Durchtrittsöffnungen (10e) benachbart mit wenigstens einem Quersteg (10f) versehen ist, welcher bezüglich der Strömungsrichtung (P₂) beispielsweise im Wesentlichen orthogonal oder schräg angeordnet sind.

5. Sedimentationsrohr nach einem der Ansprüche 1 bis 4,
**dadurch gekennzeichnet, dass** wenigstens ein Strömungsraum (10c) bezogen auf die Strömungsrichtung (P₂) des Abwassers mit Gegengefälle angeordnet ist.

6. Sedimentationsrohr nach einem der Ansprüche 1 bis 5,
**dadurch gekennzeichnet, dass** wenigstens ein Ende (10a, 10b) wenigstens eines Strömungsraums (10c) und gegebenenfalls auch wenigstens eines Sedimentationsraums (10d) in einem im Wesentlichen vertikal verlaufenden Schacht (14, 18) endet.

7. Sedimentationsrohr nach einem der Ansprüche 1 bis 6,
**dadurch gekennzeichnet, dass** eines der Enden (10a, 10b) wenigstens eines Sedimentationsraums (10d), vorzugsweise dessen höher gelegenes Ende (10b), mit einem Anschlusskanal (30) zum Einführen eines Reinigungsgeräts verbunden ist.

8. Sedimentationsrohr nach einem der Ansprüche 1 bis 7,
**dadurch gekennzeichnet, dass** eines der Enden (10a, 10b) wenigstens eines Sedimentationsraums (10d), vorzugsweise dessen tiefer gelegenes Ende (10a), mit einem Schmutzfracht-Auffangbehälter (14a) verbunden ist.

9. Sedimentationsrohr nach einem der Ansprüche 1 bis 8,
**dadurch gekennzeichnet, dass** wenigstens ein Strömungsraum (10c) und wenigstens ein Sedimentationsraum (10d) einstückig ausgebildet sind.

10. Sedimentationsrohr nach einem der Ansprüche 1 bis 9,
**dadurch gekennzeichnet, dass** wenigstens ein Strömungsraum (10c) oder/und wenigstens ein Sedimentationsraum (10d) aus Kunststoff gefertigt ist.

## Claims

1. Sedimentation pipe (10) for removing at least some pollution loads from wastewater, comprising at least one flow space (10c) having at least one inlet opening (10g) and at least one outlet opening (10h), wherein the wastewater enters the flow space (10c) through the at least one inlet opening (10g) and exits the at least one flow space (10c) through the at least one outlet opening (10h) after flowing through the at least one flow space (10c), wherein, due to the effect of gravity, at least some of the pollution load sinks to the floor while flowing through the at least one flow space (10c), wherein the at least one flow space (10c) is connected to at least one sedimentation space (10d) via at least one through-flow opening (10e) provided on the floor (10f) thereof, in which sedimentation space the pollution loads which sink to the floor in the at least one flow space (10c) and pass through the at least one through-flow opening (10e) settle, and wherein at least one sedimentation space (10d) comprises at least one maintenance opening (10i, 10j), which is closed during sedimentation but can be opened when required for cleaning purposes.

2. Sedimentation pipe according to claim 1, **characterised in that** at least one flow space (10c) and at least one sedimentation space (10d) are interconnected by a single through-flow opening (10e) which is continuous in the flow direction (P₂).

3. Sedimentation pipe according to claim 1, **characterised in that** at least one flow space (10c) and at least one sedimentation space (10d) are interconnected by a plurality of through-flow openings (10e), which are preferably arranged in a row in the flow direction (P₂) and/or have an elongate configuration.

4. Sedimentation pipe according to claim 3, **characterised in that** the floor (10e) of at least one flow space (10c) is provided with at least one transverse web (10f) adjacent to the through-flow openings (10e), which web is for example substantially orthogonal or oblique in relation to the flow direction (P₂).

5. Sedimentation pipe according to any of claims 1 to 4, **characterised in that** at least one flow space (10c) is arranged with a reverse gradient in relation to the flow direction (P₂) of the wastewater.

6. Sedimentation pipe according to any of claims 1 to 5, **characterised in that** at least one end (10a, 10b) of at least one flow space (10c) and, where appropriate, also of at least one sedimentation space (10d) terminates in a substantially vertical shaft (14, 18).

7. Sedimentation pipe according to any of claims 1 to 6, **characterised in that** one of the ends (10a, 10b) of at least one sedimentation space (10d), preferably the higher end (10b) thereof, is connected to a connection duct (30) for introducing a cleaning device.

8. Sedimentation pipe according to any of claims 1 to 7, **characterised in that** one of the ends (10a, 10b) of at least one sedimentation space (10d), preferably the lower end (10a) thereof, is connected to a pollution load collection container (14a).

9. Sedimentation pipe according to any of claims 1 to 8, **characterised in that** at least one flow space (10c) and at least one sedimentation space (10d) are formed in one piece.

10. Sedimentation pipe according to any of claims 1 to 9, **characterised in that** at least one flow space (10c) and/or at least one sedimentation space (10d) are produced from plastics material.

## Revendications

1. Tube de sédimentation (10) pour l'élimination au moins partielle de charges d'impuretés hors des eaux usées, qui présente au moins une chambre d'écoulement (10c) avec au moins une ouverture d'entrée (10g) et au moins une ouverture de sortie (10h),
dans lequel les eaux usées entrent dans la chambre d'écoulement (10c) par ladite au moins une ouverture d'entrée (10g) et, après avoir traversé ladite au moins une chambre d'écoulement (10c), sortent de nouveau de ladite au moins une chambre d'écoulement (10c) par ladite au moins une ouverture de sortie (10h),
dans lequel au moins une partie de la charge d'impuretés descend vers le fond sous l'action de la gravité pendant la traversée de ladite au moins une chambre d'écoulement (10c),
dans lequel ladite au moins une chambre d'écoulement (10c) est reliée, par au moins une ouverture de passage (10e) prévue dans son fond (10f), à au moins une chambre de sédimentation (10d), dans laquelle se déposent des charges d'impuretés descendant vers le fond dans ladite au moins une chambre d'écoulement (10c) et passant à travers ladite au moins une ouverture de passage (10e), et
dans lequel au moins une chambre de sédimentation (10d) présente au moins une ouverture d'entretien (10i, 10j), qui est fermée en fonctionnement de sédimentation mais qui peut être ouverte si nécessaire pour effectuer un nettoyage.

2. Tube de sédimentation selon la revendication 1, **caractérisé en ce qu'**au moins une chambre d'écoulement (10c) et au moins une chambre de sédimentation (10d) sont reliées l'une à l'autre par une seule ouverture de passage (10e) formée de façon ininterrompue dans la direction d'écoulement (P₂).

3. Tube de sédimentation selon la revendication 1, **caractérisé en ce qu'**au moins une chambre d'écoulement (10c) et au moins une chambre de sédimentation (10d) sont reliées l'une à l'autre par une multiplicité d'ouvertures de passage (10e) disposées à la suite l'une de l'autre et/ou réalisées sous forme allongée, de préférence dans la direction d'écoulement (P₂).

4. Tube de sédimentation selon la revendication 3, **caractérisé en ce que** le fond (10e) d'au moins une chambre d'écoulement (10c) est muni, à proximité des ouvertures de passage (10e), d'au moins une nervure transversale (10f), qui est/sont disposée(s) par exemple essentiellement de façon orthogonale ou oblique par rapport à la direction d'écoulement (P₂).

5. Tube de sédimentation selon l'une quelconque des revendications 1 à 4, **caractérisé en ce qu'**au moins une chambre d'écoulement (10c) est disposée avec une pente inverse par rapport à la direction d'écoulement (P₂) des eaux usées.

6. Tube de sédimentation selon l'une quelconque des revendications 1 à 5, **caractérisé en ce qu'**au moins une extrémité (10a, 10b) d'au moins une chambre d'écoulement (10c) et éventuellement aussi d'au moins une chambre de sédimentation (10d) se termine dans un puits (14, 18) essentiellement vertical.

7. Tube de sédimentation selon l'une quelconque des revendications 1 à 6, **caractérisé en ce qu'**une des extrémités (10a, 10b) d'au moins une chambre de sédimentation (10d), de préférence son extrémité située plus haut (10b), est reliée à un canal de raccordement (30) pour l'introduction d'un appareil de nettoyage.

8. Tube de sédimentation selon l'une quelconque des revendications 1 à 7, **caractérisé en ce qu'**une des extrémités (10a, 10b) d'au moins une chambre de sédimentation (10d), de préférence son extrémité située plus bas (10a), est raccordée à un récipient de collecte de la charge d'impuretés (14a).

9. Tube de sédimentation selon l'une quelconque des revendications 1 à 8, **caractérisé en ce qu'**au moins une chambre d'écoulement (10c) et au moins une chambre d'écoulement (10d) sont formées d'une seule pièce.

10. Tube de sédimentation selon l'une quelconque des revendications 1 à 9, **caractérisé en ce qu'**au moins une chambre d'écoulement (10c) et/ou au moins une chambre de sédimentation (10d) est fabriquée en matière plastique.
